# FASCICULE DE BREVET EUROPEEN

(11) **EP 2 392 509 B1**
(45) Date de publication et mention de la délivrance du brevet: **03.10.2012**
(21) Numéro de dépôt: 11168212.6
(22) Date de dépôt: 31.05.2011
(51) Int. Cl.: B64D 29/00, F01D 21/00, F01D 25/26, B64D 29/06

(54) **Porte à double fonction pour nacelle de moteur d'aéronef**
Doppelfunktionstür für Flugzeugtriebwerksgondel
Dual function door for aircraft engine nacelle

(30) Priorité: 04.06.2010 FR 1054414
(43) Date de publication de la demande: 07.12.2011
(73) Titulaire: Airbus Operations, 31060 Toulouse (FR); Airbus, 31700 Blagnac (FR)
(72) Inventeur: Guillaume, Pierre, 31200 TOULOUSE (FR); Lair, Patrick, 31530 LASSERRE (FR)
(74) Mandataire: Ilgart, Jean-Christophe

(56) Documents cités:
- EP-A2- 1 691 035
- FR-A1- 2 406 729
- FR-A1- 2 623 250
- FR-A1- 2 920 134
- US-A- 5 704 207

## Description

### DOMAINE TECHNIQUE

La présente invention se rapporte à une porte pour nacelle de moteur d'aéronef, de préférence destinée à être implantée sur un capot mobile de la nacelle.

L'invention s'applique à des nacelles pouvant loger tous types de moteurs, en particulier des turboréacteurs à double flux.

### ÉTAT DE LA TECHNIQUE ANTÉRIEURE

De façon connue, une nacelle entoure un moteur d'aéronef afin de constituer un carénage aérodynamique autour de ce moteur. Il comprend des éléments fixes et des éléments mobiles, ces derniers étant dénommés capots de nacelle, et généralement montés articulés sur le mât d'accrochage du moteur.

La nacelle définit intérieurement un logement dans lequel est agencé le moteur muni de ses équipements/accessoires, la partie de ce logement située au droit de la chambre de combustion étant habituellement dénommée compartiment moteur. A l'arrêt de ce moteur, après une période de fonctionnement, de l'air chaud est susceptible de s'accumuler dans l'espace du compartiment moteur laissé libre entre la nacelle et ce même moteur. Pour faire face à cet effet néfaste, dit effet « Soak Back », il peut être prévu des moyens spécifiques équipant la nacelle, permettant d'évacuer l'air chaud en dehors du compartiment moteur. Cela permet de limiter les sollicitations thermiques du moteur, de ses équipements, et des éléments de nacelle.

Le document FR 2 6 23 250 est consideré de représenter l'état de la technique le plus proche et divulgue toutes les caractéristiques du préambule de la revendication 1. Par ailleurs, la nacelle est équipée de moyens spécifiques permettant de limiter les risques de détérioration susceptibles de survenir suite à l'éclatement d'un conduit de gaz sous pression, dans le compartiment moteur. Les moyens spécifiques prennent ici généralement la forme d'une ou plusieurs portes de surpression, permettant, lors de leur ouverture, d'évacuer les gaz en surpression en dehors du compartiment moteur.

Si la conception décrite ci-dessus est largement répandue, elle demeure néanmoins complexe, en particulier en raison de la nécessité de prévoir des moyens spécifiques distincts pour traiter respectivement les problèmes de sollicitation thermique, et les problèmes de surpression.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a tout d'abord pour objet une porte pour nacelle de moteur d'aéronef, comprenant un ouvrant conçu de manière à pouvoir occuper une position fermée et une position ouverte, ladite porte comprenant des moyens de verrouillage permettant de verrouiller l'ouvrant en position fermée, ainsi que des moyens de mise en mouvement de l'ouvrant permettant de déplacer ce dernier de la position fermée vers la position ouverte lorsque les moyens de verrouillage sont désactivés.

Selon l'invention, lesdits moyens de verrouillage présentent un fusible mécanique prévu pour rompre sous l'effet d'un effort exercé par l'ouvrant et résultant d'une pression gazeuse d'ouverture s'appliquant sur l'ouvrant, de valeur supérieure ou égale à une valeur prédéterminée et provoquant le déplacement dudit ouvrant de la position fermée vers la position ouverte après rupture dudit fusible mécanique.

L'invention est remarquable en ce qu'elle permet, à l'aide d'une même porte, de répondre aux problèmes de sollicitation thermique et de surpression. En effet, l'air chaud enfermé entre le moteur à l'arrêt et la nacelle peut être évacué en amenant l'ouvrant de la porte en position ouverte, via la désactivation des moyens de verrouillage, puis l'activation, de préférence automatique, des moyens de mise en mouvement de l'ouvrant. En outre, lorsque des gaz se retrouvent en surpression de niveau réputé inacceptable entre le moteur et la nacelle, par exemple suite à l'éclatement d'un conduit, ces gaz peuvent également être évacués par la même porte. Effectivement, cette pression d'ouverture qui s'applique sur l'ouvrant de la porte, et qui atteint ou dépasse ladite valeur prédéterminée, pousse cet ouvrant à exercer un effort conduisant à la rupture du fusible mécanique équipant les moyens de verrouillage. N'étant à ce stade plus maintenu en position fermée par les moyens de verrouillage dégradés par la rupture du fusible, l'ouvrant de la porte est alors déplacé vers la position ouverte sous l'effet de cette même pression d'ouverture, position dans laquelle les gaz en surpression peuvent naturellement être évacués par la porte.

Une telle porte comporte un cadre de porte qui peut être constitué directement par la structure de la nacelle sur laquelle l'ouvrant doit être implanté, ou bien peut alternativement être constitué par un élément spécifique formant cadre, destiné à être rapporté sur la structure de la nacelle. Dans ce dernier cas, la porte selon l'invention a l'avantage de pouvoir se présenter sous la forme d'un équipement remplaçable en escale (de l'anglais « Line Replaceable Unit »).

La porte selon l'invention peut être implantée à tout endroit réputé approprié de la nacelle, sur un élément fixe ou mobile de celle-ci, et préférentiellement sur un ou plusieurs des éléments de nacelle délimitant le compartiment moteur dédié au logement des équipements.

Le nombre de portes selon l'invention équipant une nacelle peut varier en fonction des besoins et contraintes rencontrés. D'ailleurs, la nacelle peut par ailleurs incorporer d'autres moyens conventionnels, connus de l'homme du métier, permettant de gérer les problèmes de sollicitation thermique ou les problèmes de surpression de gaz.

De préférence, la porte est conçue de sorte que l'ouvrant puisse être déplacé de la position ouverte à la position fermée sous l'effet d'une pression gazeuse de fermeture s'appliquant sur l'ouvrant. Cette pression gazeuse de fermeture peut en particulier être appliquée par le flux secondaire du moteur, lorsque celui-ci prend la forme d'un turboréacteur à double flux. Alternativement, la fermeture de l'ouvrant pourrait être opérée à l'aide de moyens commandés conventionnels, par exemple ceux servant également à assurer l'ouverture de l'ouvrant. La solution préférentielle retenue présente néanmoins l'avantage de s'affranchir des risques de panne des moyens de commande, puisque la fermeture s'effectue par le simple passage d'un flux gazeux sur la surface extérieure de l'ouvrant, conduisant au rabattement de ce dernier.

De préférence, la porte est conçue de sorte que l'ouvrant soit automatiquement verrouillé par les moyens de verrouillage lorsqu'il atteint la position fermée, lors de son déplacement de la position ouverte à la position fermée. Il n'est donc avantageusement pas nécessaire de commander les moyens de verrouillage pour obtenir le verrouillage de l'ouvrant atteignant la position fermée, cette opération s'effectuant automatiquement.

De préférence, comme évoqué ci-dessus, les moyens de mise en mouvement de l'ouvrant sont conçus pour engendrer un déplacement automatique de ce dernier de la position fermée vers la position ouverte, lorsque les moyens de verrouillage sont désactivés. Il peut par exemple s'agir d'un ou plusieurs ressorts équipant les charnières de l'ouvrant, dans le cas préférentiel ou cet ouvrant est monté pivotant sur le cadre de porte, par le biais de ces charnières.

De préférence, les moyens de verrouillage permettant de verrouiller l'ouvrant en position fermée sont conçus pour être commandés électriquement afin d'adopter alternativement une configuration activée et une configuration désactivée. Il peut par exemple d'agir d'au moins un électro-aimant à arbre mobile de sortie, remplissant la fonction de pêne.

De préférence, cet arbre mobile de sortie intègre ledit fusible mécanique et présente une extrémité libre biseautée, ces deux caractéristiques pouvant néanmoins être prévues l'une sans l'autre. La dernière caractéristique permet à l'ouvrant de se verrouiller automatiquement lors de son déplacement de la position ouverte à la position fermée, sans être gêné par l'arbre mobile de sortie capable de se rétracter temporairement sous l'effet de l'effort exercé par l'ouvrant et/ou la têtière des moyens de verrouillage sur l'extrémité biseautée de l'arbre, lors de la fermeture de l'ouvrant.

L'invention a également pour objet un élément de nacelle, de préférence un capot de nacelle mobile, comprenant au moins une porte telle que décrite ci-dessus. Il s'agit de préférence d'un capot mobile d'inverseur de poussée. Alternativement, il peut par exemple s'agir d'un capot mobile de soufflante.

De préférence, l'élément de nacelle comprend une structure intérieure et une structure extérieure entre lesquelles le flux secondaire du moteur est destiné à circuler, ladite porte étant agencée sur ladite structure intérieure. Comme mentionné ci-dessus, cela permet d'utiliser le flux secondaire du turboréacteur pour exercer ladite pression gazeuse de fermeture visant à déplacer l'ouvrant de la position ouverte à la position fermée, sans requérir d'action spécifique de la part de l'opérateur.

Enfin, l'invention a pour objet un aéronef comprenant au moins un ensemble moteur comportant un moteur ainsi qu'une nacelle agencée autour du moteur, ladite nacelle comprenant au moins un élément de nacelle tel que décrit ci-dessus.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique en coupe transversale d'un ensemble moteur pour aéronef, comprenant une nacelle équipée de deux capots mobiles intégrant chacun des portes selon un mode de réalisation préféré de la présente invention ;
- la figure 2 représente une vue schématique en perspective de l'un des deux capots mobiles de nacelle montrés sur la figure 1 ;
- les figures 3a à 3e représentent des vues schématiques de l'une des portes montrées sur les figures précédentes, dans différents états adoptés successivement après l'arrêt du moteur ; et
- les figures 4a et 4b représentent des vues schématiques de l'une des portes montrées sur les figures 1 à 3a, dans différents états adoptés successivement suite à une surpression anormale rencontrée sur la surface intérieure du capot mobile de soufflante muni de la porte.

### EXPOSÉ DÉTAILLÉ DE MODES DE RÉALISATION PARTICULIERS

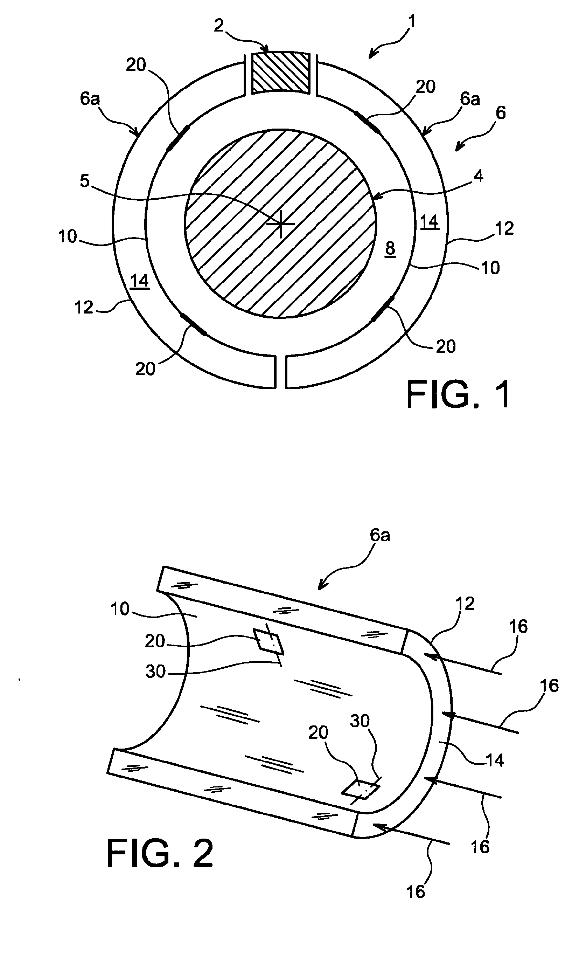

En référence à la figure 1, on voit un ensemble moteur 1 pour aéronef destiné à être fixé sous une aile / voilure de cet aéronef, cet ensemble 1 comportant un mât d'accrochage 2, un turboréacteur 4 à double flux, ainsi qu'une nacelle 6 entourant le turboréacteur 4 d'axe longitudinal 5.

Sur la figure 1, l'ensemble moteur est représenté en coupe transversale passant par le compartiment moteur 8 situé au droit de la chambre de combustion du turboréacteur, ce compartiment moteur 8 étant classiquement délimité axialement entre la soufflante et le carter d'éjection des gaz du turboréacteur, et radialement entre la nacelle 6 et le carter central du turboréacteur. Ce compartiment 8 sert au logement d'équipements/accessoires du moteur.

Dans la coupe représentée, la nacelle 6 prend la forme de deux capots mobiles de nacelle 6a, qui sont des capots mobiles d'inverseur de poussée. Chacun de ces capots 6a prend la forme générale d'un demi-cylindre centré sur l'axe 5, dont l'extrémité supérieure est montée pivotante sur le mât d'accrochage 2.

En référence conjointement aux figures 1 et 2, chaque capot mobile de nacelle 6a comprend une structure intérieure 10, dite IFS (de l'anglais « Inner Fan Structure »), et une structure extérieure, dite OFS (de l'anglais « Outer Fan Structure »), entre lesquelles est défini un espace radial 14 traversé par le flux secondaire annulaire du turboréacteur, schématisé par les flèches 16 sur la figure 2.

A cet égard, il est indiqué que c'est la structure intérieure 10 qui délimite radialement le compartiment moteur 8. C'est aussi cette structure intérieure 10 sur laquelle est agencée au moins une porte 20 selon l'invention. Ici, il a été représenté schématiquement deux portes 20 équipant chacun des deux capots mobiles 6a, les deux portes 20 équipant une même structure intérieure 10 étant décalées l'une de l'autre selon la hauteur, et éventuellement aussi selon la direction axiale, comme cela a été schématisé sur la figure 2. Il est précisé néanmoins que le nombre de portes 20 équipant chaque structure intérieure 10 de capot de nacelle peut varier en fonction des besoins et contraintes rencontrés.

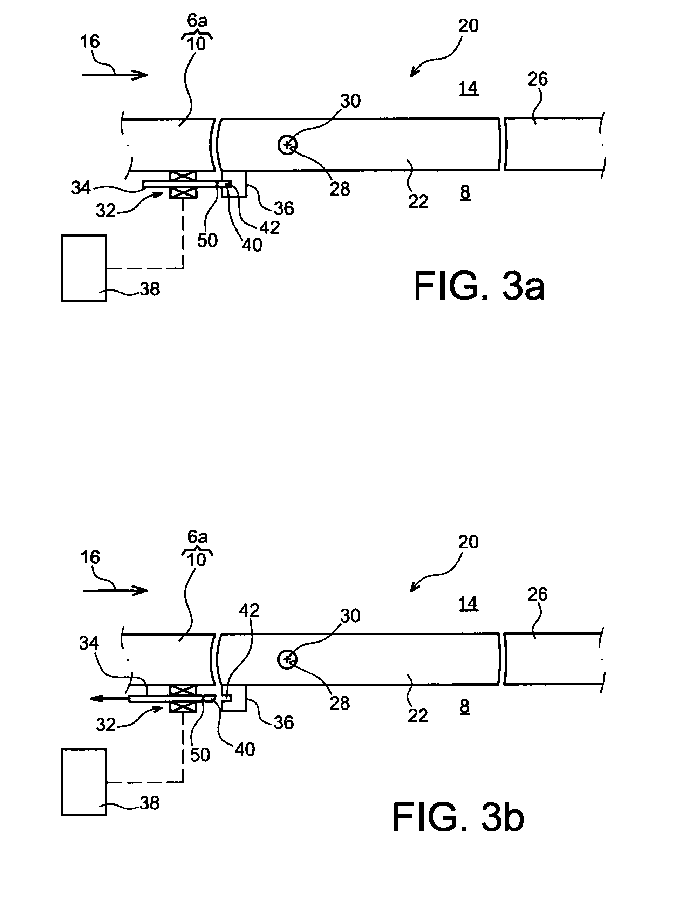

La figure 3a montre de façon plus détaillée l'une des deux portes 20, qui se présente sous la forme d'un mode de réalisation préféré de la présente invention. Naturellement, l'autre porte 20 équipant la structure intérieure 10 de capot de nacelle présente une conception identique ou similaire à celle qui va à présent être détaillée.

La porte 20 comprend un ouvrant 22, de forme globalement carrée ou rectangulaire, montée pivotante sur un cadre de porte 26 formé ici directement par une ouverture dans la structure intérieure 10 du capot de nacelle 6a.

Ce montage s'effectue à l'aide de charnières/pions 28 reliant l'ouvrant 22 au cadre 26, ces charnières 28 définissant ainsi un axe d'articulation 30 de l'ouvrant 22 par rapport à la structure intérieure 10. L'axe d'articulation 30 est excentré de manière à se situer plus prêt de l'extrémité amont de l'ouvrant 22 que de son extrémité aval, en relation avec la direction d'écoulement 16 du flux annulaire secondaire épousant la surface extérieure de l'ouvrant 22, et celle de la structure intérieure 10. En outre, cet axe 30 est localement orthogonal au flux secondaire 16.

La porte 20 comprend des moyens de verrouillage permettant de verrouiller l'ouvrant 22 en position fermée, telle que montrée sur la figure 3a. Dans cette position, l'ouvrant 20 assure une continuité aérodynamique de la structure intérieure 10, afin de limiter au mieux les perturbations du flux secondaire qui les épouse.

Les moyens de verrouillage sont ici conçus pour être commandés électriquement afin d'adopter alternativement une configuration activée et une configuration désactivée. Il comprennent un électro-aimant 32 à arbre mobile de sortie 34, remplissant la fonction de pêne. Cet arbre mobile de sortie 34 est soit constitué par le noyau de fer de l'électro-aimant, soit solidaire de ce dernier. L'électro-aimant 32 est rapporté fixement sur le cadre de porte 26, tandis que les moyens de verrouillage comprennent par ailleurs une ferrure 36 formant têtière, solidaire d'une extrémité amont de l'ouvrant 22 et destinée à recevoir l'extrémité libre de l'arbre 34.

L'électro-aimant 32 est relié à des moyens de commande 38 prévus pour lui délivrer ou non une tension électrique. Lorsqu'une telle tension est délivrée, l'arbre de sortie 34 se trouve en position extraite/déployée vers l'aval. De plus, lorsque l'ouvrant 22 est en position fermée, l'extrémité aval 40 de l'arbre 34 déployé se trouve logée à l'intérieur de la têtière 42 de la ferrure 36, ce qui permet d'amener les moyens de verrouillage en configuration activée, dans laquelle l'ouvrant 22 est maintenu/verrouillé en position fermée.

En revanche, lorsqu'aucune tension n'est délivrée par les moyens de commande 38, l'arbre de sortie 34 se trouve en position rétractée vers l'amont, dans laquelle son arbre de sortie 34 est extrait de la têtière 42, amenant ainsi les moyens de verrouillage en configuration désactivée. A cet égard, il est noté que suite à la coupure de l'alimentation électrique de l'électro-aimant 32, le passage de l'arbre 34 de la position extraite à la position rétractée s'effectue automatiquement, par exemple à l'aide d'un ou plusieurs ressorts.

L'arbre mobile de sortie 34 intègre, à proximité de son extrémité aval 40, un fusible mécanique 50 prenant la forme d'une rupture de section, par exemple obtenue par la réalisation d'une rainure circulaire sur cet arbre. Le but de ce fusible 50 est de constituer une zone de rupture privilégiée sur la portion de l'arbre 34 qui se trouve en saillie des bobines de l'électro-aimant 32, afin de remplir une fonction de limitation des surpressions qui sera explicitée ci-après.

En outre, l'extrémité aval libre 40 de l'arbre 34 est biseautée, afin de permettre à l'ouvrant 22 de se verrouiller automatiquement lors de son déplacement d'une position ouverte à la position fermée, comme cela sera détaillé ci-dessous.

La figure 3a montre donc l'ouvrant 22 en position fermée, dans laquelle il est verrouillé par les moyens de verrouillage en configuration activée. Lors de l'arrêt du turboréacteur, au sol, la chaleur dégagée par ce dernier conduit à un échauffement de l'air situé dans le compartiment moteur 8. Afin de limiter les sollicitations thermiques des éléments environnants, la porte 20 est avantageusement employée pour évacuer cet air chaud, et ce de manière automatisée. En effet, les moyens de commande 38 de l'électro-aimant 32 sont conçus pour stopper automatiquement l'alimentation électrique lorsque deux conditions sont réunies, la première étant l'arrêt en rotation des éléments tournants du turboréacteur, et la seconde étant la non-alimentation du FADEC (de l'anglais « Full-Authority Digital Engine Control »).

Lorsque ces deux conditions sont réunies, les moyens de commande 38 arrêtent donc d'alimenter l'électro-aimant 32, qui voit alors son arbre de sortie 34 se rétracter automatiquement vers l'amont. Les moyens de verrouillage adoptent ainsi la configuration désactivée dans laquelle ils ne sont plus en mesure de retenir l'ouvrant en position fermée.

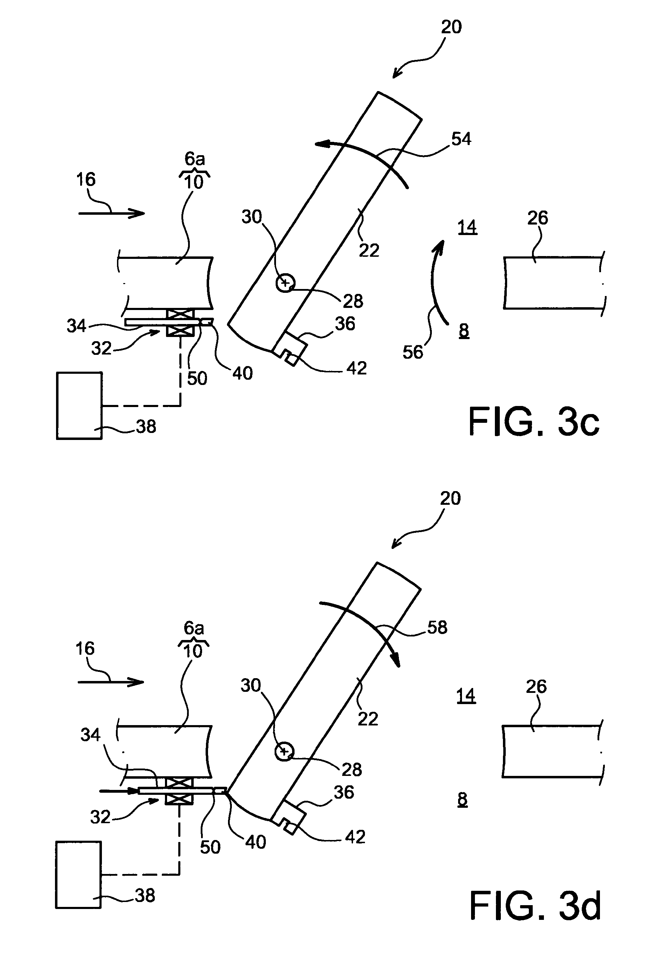

Dès le déverrouillage de l'ouvrant 22, schématisé sur la figure 3b, des moyens de mise en mouvement de ce dernier engendrent son déplacement automatique de la position fermée vers la position ouverte montrée sur la figure 3c. La mise en mouvement de l'ouvrant 22, schématisée par la flèche 54 sur la figure 3c, s'effectue par exemple à l'aide d'un ou plusieurs ressorts (non représentés) intégrés aux charnières 28. Une fois la position ouverte atteinte sous l'effet des ressorts, l'ouvrant 22 libère le cadre de porte 26 à travers lequel l'air chaud peut s'échapper du compartiment moteur 8, en direction de l'espace radial 14 défini par le capot mobile de nacelle. L'évacuation de l'air chaud autorisée par l'ouverture de l'ouvrant 22 est schématisée par la flèche 56 de la figure 3c.

Avant une nouvelle phase de vol de l'aéronef, il convient de refermer l'ouvrant 22 de la porte 20. Pour ce faire, une solution automatique est également privilégiée. Elle consiste tout d'abord à réalimenter l'électro-aimant 32, par le biais des moyens de commande 38. Cette réalimentation électrique, qui a pour conséquence d'amener à nouveau l'arbre de sortie 34 en position extraite vers l'aval telle que montrée sur la figure 3d, est par exemple ordonnée dès le redémarrage électrique du turboréacteur.

Ce redémarrage conduit le flux secondaire 16 à circuler à nouveau dans l'espace radial 14 du capot mobile de nacelle, avec pour conséquence d'appliquer une pression gazeuse de fermeture sur la surface extérieure de l'ouvrant 22 en saillie dans cet espace 14. La conception est retenue de sorte que cette pression gazeuse délivrée par le flux secondaire 16 surmonte l'effort généré par les ressorts intégrés aux charnières 28, impliquant alors une fermeture automatique de l'ouvrant 22 par simple pression gazeuse conduisant au rabattement de ce dernier.

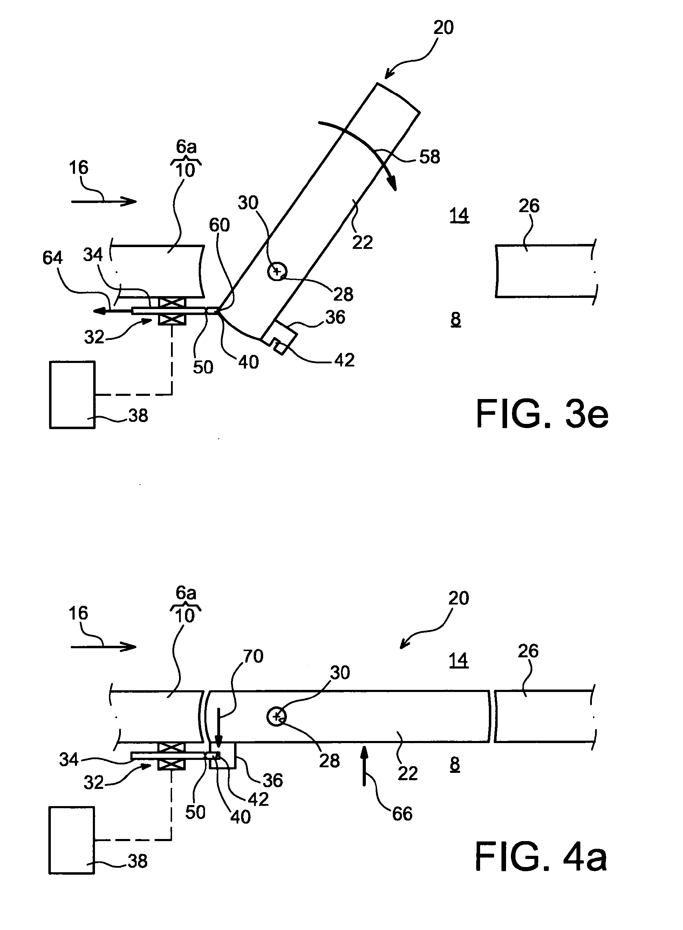

La mise en mouvement de l'ouvrant 22 vers sa position fermée, schématisée par la flèche 58 sur la figure 3d, s'effectue sans obstacle durant la phase initiale de ce mouvement. En revanche, comme cela a été montré sur la figure 3e, l'extrémité amont de l'ouvrant 22 vient rapidement contacter l'extrémité aval libre 40 de l'arbre 34 déployé. Afin de ne pas bloquer le mouvement de fermeture de l'ouvrant, l'extrémité aval libre 40 est biseautée, dans le but de présenter une surface biseautée 60 sur laquelle l'extrémité amont de l'ouvrant 22 peut glisser pendant la poursuite du mouvement de fermeture. Durant ce glissement, le contact entre l'ouvrant et l'arbre conduit ce dernier à se rétracter temporairement et partiellement vers l'aval, comme cela a été schématisé par la flèche 64 de la figure 3e. Ce retrait de l'arbre 34 s'effectue donc en surmontant l'effort électromagnétique produit par les bobines de l'électro-aimant 32, maintenu sous tension.

Le glissement se poursuit sur l'ouvrant 22 et la ferrure 36 jusqu'à ce que l'extrémité aval libre 40 se retrouve en regard de la têtière 42, dans laquelle cette extrémité 40 s'insère automatiquement grâce à l'effort électromagnétique.

De cette manière, l'ouvrant 22 se retrouve automatiquement verrouillé par les moyens de verrouillage lorsqu'il atteint la position fermée montrée sur la figure 3a, lors de son déplacement de la position ouverte à la position fermée provoqué par le flux secondaire.

L'aéronef peut alors être mis en mouvement avec les portes de nacelle 20 en position fermée.

Les portes 20 peuvent fonctionner de la sorte après chaque arrêt des turboréacteurs, afin de traiter les problèmes de sollicitation thermique. Mais, avantageusement, ces portent remplissent également, pour au moins l'une d'elles, une fonction de traitement des problèmes de surpression gazeuse susceptible de survenir dans le logement défini intérieurement par la nacelle, à savoir ici dans le compartiment moteur 8.

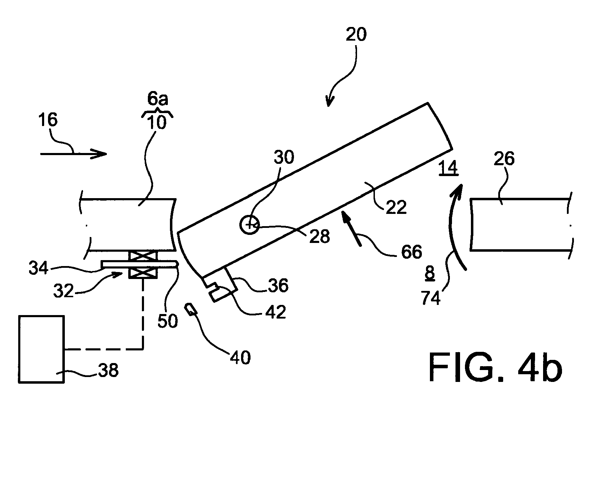

En effet, lorsque des gaz se retrouvent en surpression de niveau réputé inacceptable dans le compartiment 8, par exemple suite à l'éclatement d'un conduit de gaz sous pression, ces gaz sont également prévus pour être évacués par la même porte. Lorsqu'une telle pression gazeuse d'ouverture s'applique sur la surface intérieure de l'ouvrant 22, comme schématisé par la flèche 66 sur la figure 4a, l'ouvrant a tendance a vouloir pivoter autour des charnières 28 pour se déplacer vers la position ouverte. L'ouvrant 22 exerce alors sur la ferrure 36 des moyens de verrouillage un effort que cette ferrure renvoie sur l'arbre de sortie 34, via la têtière 42. Cet effort, schématisé par la flèche 70 sur la figure 4a, conduit à la rupture du fusible mécanique 50, et donc à la cassure en deux morceaux de l'arbre de sortie 34 des moyens de verrouillage, tel que cela a été schématisé sur la figure 4b. A ce stade, l'ouvrant 22 n'est donc plus maintenu en position fermée par les moyens de verrouillage dégradés par la rupture du fusible 50. Par conséquent, l'ouvrant 22 se voit déplacé vers la position ouverte sous l'effet de cette même pression gazeuse d'ouverture 66, position dans laquelle les gaz en surpression peuvent naturellement être évacués par la porte, comme cela a été schématisé par la flèche 74 de la figure 4b.

La valeur prédéterminée de pression à partir de laquelle la pression gazeuse d'ouverture 66 va engendrer la rupture du fusible mécanique 50 est déterminée de manière à ce qu'elle traduise une élévation anormale de la pression au sein du compartiment moteur 8. Cette valeur prédéterminée peut être comprise entre 4 et 20 psig, à savoir entre environ 0,28 et 1,38 bar s'ajoutant à la pression ambiante.

En vol, après que les gaz en surpression aient été évacués dans l'espace 14 et transportés par le flux secondaire du turboréacteur, ce même flux permet de rabattre l'ouvrant 22 jusqu'à la mise hors service du turboréacteur au sol. Cette ouverture n'étant pas « réversible », au contraire de l'ouverture décrite ci-dessus réalisée par la désactivation commandée des moyens de verrouillage, il convient ensuite de réparer ces mêmes moyens de verrouillage, par une opération conventionnelle de maintenance au sol.

Bien entendu, diverses modifications peuvent être apportées par l'homme du métier à l'invention qui vient d'être décrite, uniquement à titre d'exemples non limitatifs.

## Revendications

1. Porte (20) pour nacelle (6) de moteur d'aéronef, ladite porte comprenant un ouvrant (22) conçu de manière à pouvoir occuper une position fermée et une position ouverte, ladite porte comprenant des moyens de verrouillage (32, 36) permettant de verrouiller l'ouvrant en position fermée, ainsi que des moyens (28) de mise en mouvement de l'ouvrant (22) permettant de déplacer ce dernier de la position fermée vers la position ouverte lorsque les moyens de verrouillage (32, 36) sont désactivés,
**caractérisée en ce que** lesdits moyens de verrouillage (32, 36) présentent un fusible mécanique (50) prévu pour rompre sous l'effet d'un effort exercé par l'ouvrant (22) et résultant d'une pression gazeuse d'ouverture (66) s'appliquant sur l'ouvrant, de valeur supérieure ou égale à une valeur prédéterminée et provoquant le déplacement dudit ouvrant de la position fermée vers la position ouverte après rupture dudit fusible mécanique (50).

2. Porte selon la revendication 1, **caractérisée en ce qu'**elle est conçue de sorte que l'ouvrant (22) puisse être déplacé de la position ouverte à la position fermée sous l'effet d'une pression gazeuse de fermeture s'appliquant sur l'ouvrant.

3. Porte selon la revendication 1 ou la revendication 2, **caractérisée en ce qu'**elle est conçue de sorte que l'ouvrant (22) soit automatiquement verrouillé par les moyens de verrouillage (32, 36) lorsqu'il atteint la position fermée, lors de son déplacement de la position ouverte à la position fermée.

4. Porte selon l'une quelconque des revendications précédentes, **caractérisée en ce que** les moyens (28) de mise en mouvement de l'ouvrant (22) sont conçus pour engendrer un déplacement automatique de ce dernier de la position fermée vers la position ouverte, lorsque les moyens de verrouillage (32, 36) sont désactivés.

5. Porte selon l'une quelconque des revendications précédentes, **caractérisée en ce que** les moyens de verrouillage (32, 36) permettant de verrouiller l'ouvrant (22) en position fermée sont conçus pour être commandés électriquement afin d'adopter alternativement une configuration activée et une configuration désactivée.

6. Porte selon la revendication 5, **caractérisée en ce que** lesdits moyens de verrouillage comprennent au moins un électro-aimant (32) à arbre mobile de sortie (34).

7. Porte selon la revendication 6, **caractérisée en ce que** ledit arbre mobile de sortie (34) intègre ledit fusible mécanique (50), et **en ce qu'**il présente une extrémité libre (40) biseautée.

8. Elément de nacelle (6a), de préférence un capot de nacelle mobile, **caractérisé en ce qu'**il comprend au moins une porte (20) selon l'une quelconque des revendications précédentes.

9. Elément de nacelle selon la revendication 8, **caractérisé en ce qu'**il comprend une structure intérieure (10) et une structure extérieure (12) entre lesquelles le flux secondaire (16) du moteur est destiné à circuler, ladite porte (20) étant agencée sur ladite structure intérieure (10).

10. Aéronef comprenant au moins un ensemble moteur (1) comportant un moteur (4) ainsi qu'une nacelle (6) agencée autour du moteur, ladite nacelle comprenant au moins un élément de nacelle (6a) selon la revendication 8 ou la revendication 9.

## Claims

1. A door (20) for an aircraft engine nacelle (6), said door comprising an opening leaf (22) designed so as to be able to occupy a closed position and an open position, said door comprising locking means (32, 36) with which the opening leaf may be locked in the closed position, as well as means (28) for setting the opening leaf (22) into motion with which the latter may be moved from the closed position towards the open position when the locking means (32, 36) are disabled,
**characterized in that** said locking means (32, 36) have a mechanical fuse (50) provided in order to break under the effect of a force exerted by the opening leaf (22) and resulting from an opening gas pressure (66) which is applied on the opening leaf, with a value greater than or equal to a predetermined value and causing the displacement of said opening leaf from the closed position to the open position after breakage of said mechanical fuse (50).

2. The door according to claim 1, **characterized in that** it is designed so that the opening leaf (22) may be moved from the open position to the closed position under the effect of closing gas pressure which is applied on the opening leaf.

3. The door according to claim 1 or claim 2, **characterized in that** it is designed so that the opening leaf (22) is automatically locked by the locking means (32, 36) when it reaches the closed position, during its displacement from the open position to the closed position.

4. The door according to claim 1, **characterized in that** the means (28) for setting the opening leaf (22) into motion are designed for generating automatic displacement of the latter from the closed position to the open position, when the locking means (32, 36) are disabled.

5. The door according to claim 1, **characterized in that** the locking means (32, 36) with which the opening leaf (22) may be locked in the closed position, are designed so as to be electrically controlled in order to alternately adopt an enabled configuration and a disabled configuration.

6. The door according to claim 5, **characterized in that** said locking means comprise at least one solenoid valve (32) with a mobile output shaft (34).

7. The door according to claim 6, **characterized in that** said mobile output shaft (34) integrates said mechanical fuse (50) and **in that** it has a beveled free end (40).

8. A nacelle element (6a), preferably a mobile nacelle cowl, **characterized in that** it comprises at least one door (20) according to claim 1.

9. The nacelle element according to claim 8, **characterized in that** it comprises an inner structure (10) and an outer structure (12) between which the secondary flow (16) of the engine is intended to circulate, said door (20) being laid out on said inner structure (10).

10. An aircraft comprising at least an engine assembly (1) including an engine (4) as well as a nacelle (6) laid out around the engine, said nacelle comprising at least one nacelle element (6a) according to claim 8 or claim 9.

## Patentansprüche

1. Tür (20) für eine Flugzeugtriebwerksgondel (6), wobei die Tür einen Türflügel (22) aufweist, der derart gestaltet ist, dass er eine geschlossene und eine geöffnete Position einnehmen kann, wobei die Tür Verriegelungsmittel (32, 36), die eine Verriegelung des Türflügels in geschlossener Position ermöglichen, sowie Mittel (28) zum Bewegen des Türflügels (22), die ein Bewegen des letzteren von der geschlossenen Position in die geöffnete Position ermöglichen, wenn die Verriegelungsmittel (32, 36) deaktiviert sind, aufweist,
**dadurch gekennzeichnet, dass** die Verriegelungsmittel (32, 36) eine mechanische Sicherung (50) aufweisen, deren Brechen vorgesehen ist unter der Wirkung einer durch den Türflügel (22) ausgeübten Kraft und infolge eines Öffnungsgasdrucks (66), der auf den Türflügel ausgeübt wird, eines Werts, der höher als ein vorgegebener Wert oder gleich einem vorgegebenen Wert ist, und wodurch ein Bewegen des Türflügels aus der geschlossenen Position in die geöffnete Position nach dem Bruch der mechanischen Sicherung (50) hervorgerufen wird.

2. Tür nach Anspruch 1, **dadurch gekennzeichnet, dass** sie derart gestaltet ist, dass der Türflügel (22) unter der Wirkung eines Schließgasdrucks, der auf den Türflügel ausgeübt wird, von der geöffneten Position in die geschlossene Position bewegt werden kann.

3. Tür nach Anspruch 1 oder Anspruch 2, **dadurch gekennzeichnet, dass** sie derart gestaltet ist, dass der Türflügel (22) während dessen Bewegung von der geöffneten Position in die geschlossene Position, sobald er die geschlossene Position erreicht, durch die Verriegelungsmittel (32, 36) automatisch verriegelt wird.

4. Tür nach einem der vorhergehenden Ansprüche, **dadurch gekennzeichnet, dass** die Mittel (28) zum Bewegen des Türflügels (22) derart gestaltet sind, dass eine automatische Bewegung des letzteren aus der geschlossenen Position in die geöffnete Position hervorgerufen wird, sobald die Verriegelungsmittel (32, 36) deaktiviert sind.

5. Tür nach einem der vorhergehenden Ansprüche, **dadurch gekennzeichnet, dass** die Verriegelungsmittel (32, 36), die ein Verriegelung des Türflügels (22) in der geschlossenen Position ermöglichen, derart gestaltet sind, dass sie elektrisch gesteuert werden können, um abwechselnd eine aktivierte Konfiguration und eine deaktivierte Konfiguration einzunehmen.

6. Tür nach Anspruch 5, **dadurch gekennzeichnet, dass** die Verriegelungsmittel mindestens einen Elektromagneten (32) mit beweglicher Ausgangswelle (34) aufweisen.

7. Tür nach Anspruch 6, **dadurch gekennzeichnet, dass** die bewegliche Ausgangswelle (34) die mechanische Sicherung (50) einbezieht und dass sie ein abgeschrägtes freies Ende (40) aufweist.

8. Gondelelement (6a), vorzugsweise bewegliche Gondeltriebwerkverkleidung, **dadurch gekennzeichnet, dass** es mindestens eine Tür (20) nach einem der vorhergehenden Ansprüche aufweist.

9. Gondelelement nach Anspruch 8, **dadurch gekennzeichnet, dass** es eine Innenstruktur (10) und eine Außenstruktur (12) aufweist, zwischen denen der Sekundärstrom (16) des Triebwerks zirkulieren soll, wobei sich die Tür (20) an der Innenstruktur (10) befindet.

10. Luftfahrzeug, umfassend mindestens ein Triebwerksystem (1), das ein Triebwerk (4) sowie eine rings um das Triebwerk befindliche Gondel (6) aufweist, wobei die Gondel mindestens ein Gondelelement (6a) nach Anspruch 8 oder Anspruch 9 aufweist.
